# EUROPEAN PATENT APPLICATION

(11) **EP 1 622 356 A1**
(43) Date of publication of application: **01.02.2006**
(21) Application number: 05016423.5
(22) Date of filing: 28.07.2005
(51) Int. Cl.: H04N 1/21, H04N 5/235, H04N 1/00

(54) **Image capture in mobile terminal**

(30) Priority: 28.07.2004 KR 2004059434
(71) Applicant: LG ELECTRONICS INC., Seoul (KR)
(72) Inventor: Jeoung, Eun-Taek, Dongan-Gu, Anyang Gyeonggi-Do (KR)
(74) Representative: von Hellfeld, Axel

(57) **Abstract**

A method for capturing a still image in a mobile terminal comprises setting at least one image capture condition and capturing a sequence of still images according to the at least one image capture condition. The at least one image capture condition is varied for each of a sequence of captured still images. The method may further comprise displaying at least one of the sequence of captured still images. The method may further comprise receiving a user selection to select at least one displayed captured still image. The method may further comprise storing the at least one displayed captured still image selected by a user.

## Description

### BACKGROUND OF THE INVENTION

### 1. Field of the Invention

The present invention relates generally to a mobile terminal and, more particularly, to image capture in a mobile terminal.

### 2. Description of the Related Art

Mobile terminals with digital camera (camera phone) and multimedia capabilities are becoming more popular. Mobile terminal users may use the camera phones 'anytime' and 'anywhere'. However, the 'camera' of a related art camera phone requires the user to manually reset image capture conditions, such as use or non-use of a flash, image magnification, screen brightness, a color effects, etc., for each new photo, if he is not satisfied with the just-taken photo. That is, after capturing an image, if the user is not satisfied with the captured image, the user must change the set image capture conditions and then recapture the image. In this case, a problem may arise due to motion of the object or a change in sunlight, for example. Thus, it becomes difficult for the user to capture the desired image.

### SUMMARY OF THE INVENTION

Accordingly, the present invention is directed to image capture in a mobile terminal that substantially obviates one or more problems due to limitations and disadvantages of the related art.

An object of the present invention is to automatically capture a sequence of images according to a plurality of predefined image capture conditions. Another object of the present invention is to automatically vary image capture conditions for each image of the sequence of images, after the first image. Another object of the present invention is to store only user-selected captured images.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a method for capturing a still image in a mobile terminal comprises setting at least one image capture condition and capturing a sequence of still images according to the at least one image capture condition. The at least one image capture condition is varied for each of a sequence of captured still images.

The method may further comprise displaying at least one of the sequence of captured still images. The method may further comprise receiving a user selection to select at least one displayed captured still image. The method may further comprise storing the at least one displayed captured still image selected by a user.

The at least one image capture condition may be set by a user. Alternatively, the at least one image capture condition may be set by the mobile terminal. The at least one image capture condition may comprise at least one of whether to use a flash, an image magnification, an image resolution, a display screen brightness, and a color effect.

The step of capturing a sequence of still images may further comprise capturing a number of still images associated with a number of set image capture conditions. The method may further comprise deleting displayed captured still images not selected by the user.

In another embodiment, a mobile terminal configured for image capture comprises a transceiver, configured to transmit and receive signals. The mobile terminal also comprises an image capture unit configured to capture a sequence of still images according to at least one predefined image capture condition. The at least one image capture condition is varied for each of a sequence of captured still images.

The mobile terminal may further comprise a display unit, operatively coupled to the image capture unit, configured to display at least one still image of the sequence of captured still images. The mobile terminal may further comprise an input unit, operatively coupled to the display unit, configured to receive a user selection to select at least one displayed still image. The mobile terminal may further comprise a storage unit, operatively coupled to the display unit, configured to store the at least one displayed still image selected by a user.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.

Figures 1A and 1B are schematic diagrams illustrating rear exterior and front exterior views, respectively, of a mobile terminal with an image capture unit, according to one embodiment of the present invention.

Figure 2 is a block diagram illustrating a mobile terminal with an image capture unit, according to one embodiment of the present invention.

Figure 3 is a flow diagram illustrating an image capture method, according to one embodiment of the present invention.

Figure 4 is reproductions of exemplary images captured according to the image capture method, according to one embodiment of the present invention.

Figure 5 is a flow diagram illustrating an image capture method, according to another embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

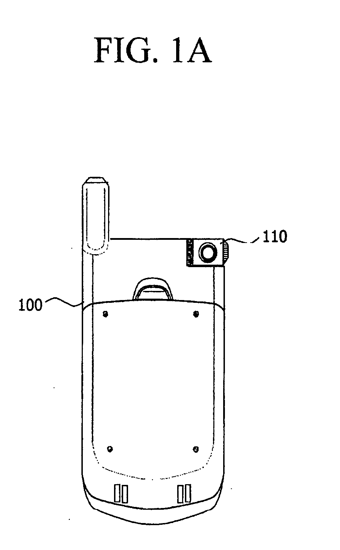

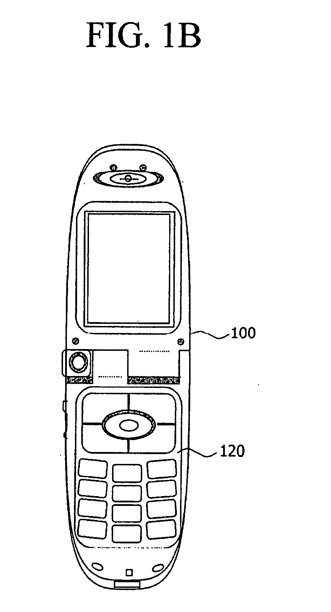

Figures 1A and 1B are schematic diagrams illustrating rear exterior and front exterior views, respectively, of a mobile terminal with an image capture unit, according to one embodiment of the present invention. That is, Figure 1A shows a rear exterior view of a folder type mobile terminal having a camera at the rear side, when the mobile terminal is in a folded state. Figure 1B shows a front exterior view of a front side of the folder type mobile terminal, when the mobile terminal is in an unfolded state.

Referring to Figure 1A, a mobile terminal 100 comprises an image capture unit (for example, a camera unit) 110 for capturing an image. Referring to Figure 1B, the mobile terminal 100 receives a command with respect to image capture through an input device (e.g., a key pad 120) and performs image capture according to the inputted command.

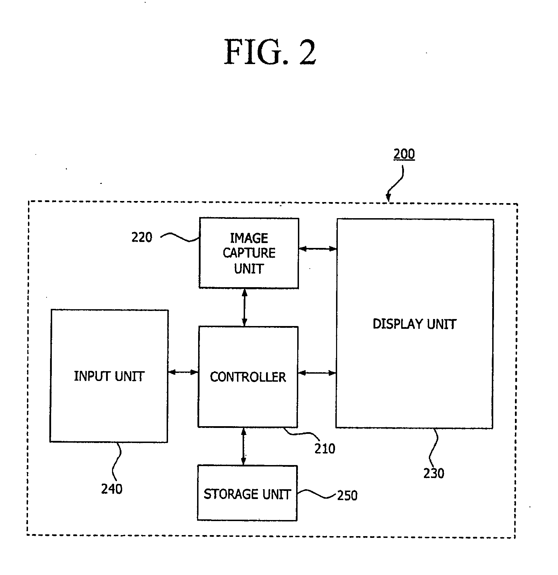

Figure 2 is a block diagram illustrating a mobile terminal with an image capture unit, according to one embodiment of the present invention.

Referring to Figure 2, a mobile terminal 200 having an image capture unit includes a controller 210 for controlling an operation of the mobile terminal 200, an image capture unit 220 for capturing an image, such as an image of an object. The mobile terminal 200 also includes a display unit 230 for displaying a captured image, an input unit 240 for receiving a command from a user, and a storage unit 250 for storing the captured image.

The controller 210 may be a processor such as a mobile station modem (MSM) or a digital signal processor (DSP). The image capture unit 220 may comprise a lens such as an optical lens.

The display unit 230 may comprise a liquid crystal display (LCD) for display of a captured image. The input unit 240 may preferably be constructed to receive a control command including a user command pertaining to image capture. The input unit 240 may be a key pad or a touch screen, for example.

The storage unit 250 may store software related to image capture and may be constructed as a volatile or non-volatile memory, such as ROM or RAM. The controller 210 may preferably perform image capture by using the software related to image capture. The storage unit 250 may store an image captured by the image capture unit 220 and may comprise a buffer for temporarily storing the captured image and/or an image storage unit for storing an image selected by the user.

An image capture method in accordance with a preferred embodiment of the present invention will now be described with reference to the mobile terminal 200 having the image capture unit. In one embodiment, a user inputs an image capture initiation command through the input unit 240. The controller 210 recognizes the image capture initiation command and commands the image capture unit 220 to perform an operation for an initial control of the image capture unit. The controller also commands the image capture unit 220 to begin image capture according to set image capture conditions. The image capture conditions may preferably be set prior to the capture of the image. Preferably, at least one of the image capture conditions is set by the user. The image capture conditions may preferably be stored in the storage unit 250. The image capture conditions may include whether or not to use a flash, an image magnification, a resolution, a display screen brightness, and a color effect.

To commence image capture, the controller 210 determines whether necessary image capture conditions have been set. If the image capture conditions are set, the controller 210 commands the image capture unit 220 to sequentially capture images and to vary a value and/or a type of at least one image capture condition. The controller also commands the image capture unit 220 to output a sequence of captured images to the display unit 230, according to the sequentially captured images. The user may then view the sequence of captured images displayed on the display unit 230, select a desired image and store the selected image in the storage unit 250. In another embodiment, the mobile terminal 200 may also include an RF module, a power management module, an antenna, a battery, a subscriber identity module (SIM) card, a speaker, and a microphone, or some combination thereof.

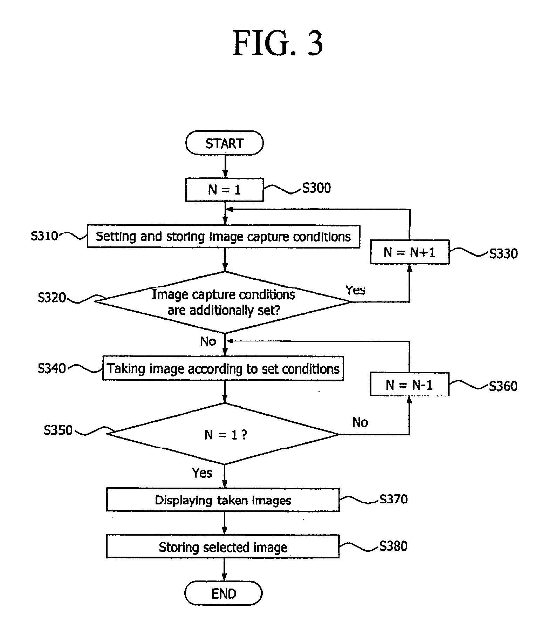

Figure 3 is a flow diagram illustrating an image capture method, according to one embodiment of the present invention.

Referring to Figure 3, the image capture method in accordance with a preferred embodiment of the present invention includes receiving an input from a user to set an image capture condition (steps S300~S330), capturing a sequence of images while varying a value and/or a type of at least one image capture condition (steps S340~S360), displaying at least one of the sequence of captured images (step S370), and storing an image selected by the user among the displayed images (step S380).

In the embodiment depicted in Figure 3, when the user operates the image capture unit, an initial value (e.g., '1') is inputted to the number 'N' of the set conditions (step S300). When the user sets image capture conditions and stores the set conditions in the mobile terminal (step S310), the mobile terminal determines whether an additional image capture condition input command is received from the user (step S320).

If an additional image capture condition input command has been received from the user, the number 'N' of the set conditions is increased by '1' (step S330). In such case, whenever an additional image capture condition input command is received, the number 'N' of the set conditions is increased by '1'. However, if no additional image capture condition input command is received from the user, then image capture begins (step S340).

The mobile terminal captures a sequence of images while varying a value and/or a type of at least one image capture condition (step S340). After image capture, the mobile terminal determines whether the value 'N' is '1' (step S350). If the value 'N' is not '1', the mobile terminal reduces the value 'N' by '1' (step S360) and returns to the image capture step (S340).

Alternatively, if the value 'N' is 1, the image capture operation is terminated and captured images are displayed on the display unit (step S370). The user may then select an image from among the displayed images. The selected image may be stored, while unselected images may be deleted (step S380).

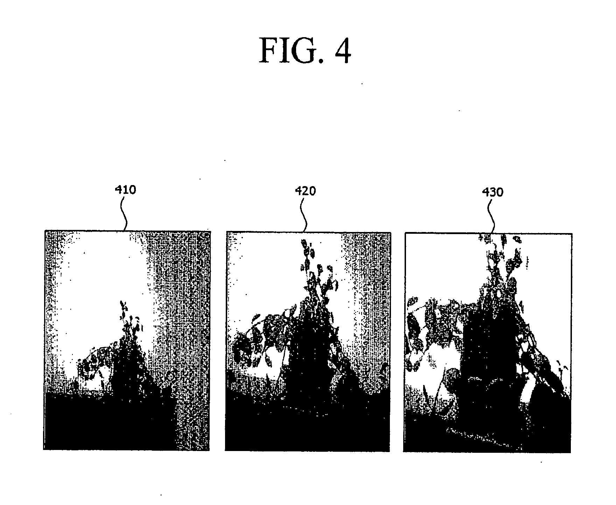

Figure 4 is reproductions of exemplary images captured according to the image capture method, according to one embodiment of the present invention.

Referring to Figure 4, one or more image capture conditions may be set. Using the image capture conditions, a sequence of three images may be captured (410~430). In the example, each of the three captured images differs according to variations in values and/or types of at least one set image capture condition. The image capture condition may be selected from screen brightness, resolution or magnification, for example. Once the images are displayed the user may select one or more images.

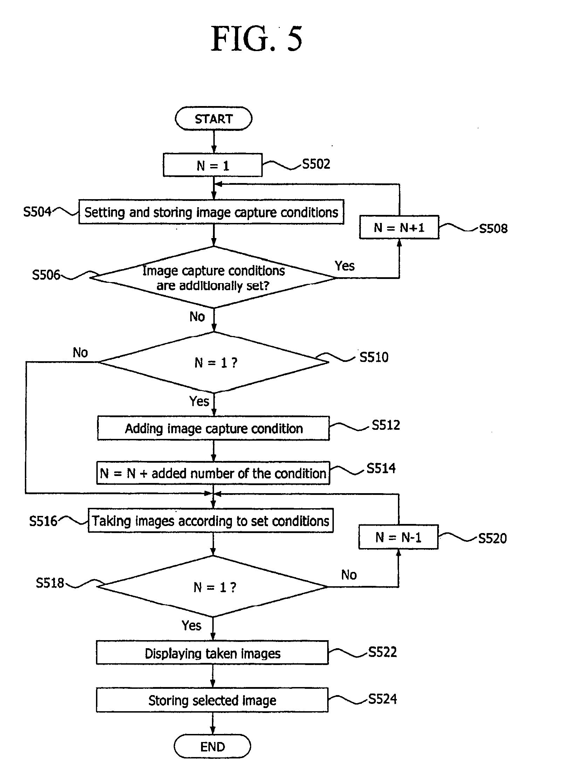

In yet another embodiment, the mobile terminal may automatically vary a value and/or a type of at least one image capture condition previously set by the user or designated as a default value. Furthermore, the mobile terminal may automatically capture a sequence of images and display them for the user's convenience. This embodiment is described in more detail with reference to Figure 5, below.

Figure 5 is a flow diagram illustrating an image capture method, according to another embodiment of the present invention.

In the embodiment depicted in Figure 5, when the user initially operates the image capture unit, an initial value '1' is inputted to the value 'N'. 'N' is the number of the image capture conditions set by the user (step S502). After the user sets image capture conditions and stores the set conditions in the mobile terminal (step S504), the mobile terminal determines whether an additional image capture input command is received from the user (step S506).

If an additional image capture condition input command is received from the user, the number of set conditions is increased by '1' (step S508). However, if no additional image capture condition input command is received from the user, a determination is made of whether the value 'N' is '1' (step S510). If the value 'N' is '1', the mobile terminal sets at least one image capture condition (step S512) and adds a number representing the number of added image capture conditions to the 'N' value (step S514). The added image capture conditions may have been set by the user for previous image capture or have been previously designated as a default value.

Once the image capture conditions are set, the mobile terminal begins image capture according to the set image capture conditions (step S516). After image capture, the mobile terminal determines whether the value 'N' is '1' (step S518). If the value 'N' is not '1', the mobile terminal reduces the value 'N' by '1' (step S520) and returns to the image capture step (S516).

Alternatively, if the value 'N' is 1, image capture is terminated and captured images are displayed on the display unit (step S522). Images are then selected by the user and selected images are stored (step S524).

In one embodiment, a method for capturing a still image in a mobile terminal comprises setting at least one image capture condition and capturing a sequence of still images according to the at least one image capture condition. The at least one image capture condition is varied for each of a sequence of captured still images.

The method may further comprise displaying at least one of the sequence of captured still images. The method may further comprise receiving a user selection to select at least one displayed captured still image. The method may further comprise storing the at least one displayed captured still image selected by a user.

The at least one image capture condition may be set by a user. Alternatively, the at least one image capture condition may be set by the mobile terminal. The at least one image capture condition may comprise at least one of whether to use a flash, an image magnification, an image resolution, a display screen brightness, and a color effect.

The step of capturing a sequence of still images may further comprise capturing a number of still images associated with a number of set image capture conditions. The method may further comprise deleting displayed captured still images not selected by the user.

In another embodiment, a mobile terminal configured for image capture comprises a transceiver, configured to transmit and receive signals. The mobile terminal also comprises an image capture unit configured to capture a sequence of still images according to at least one predefined image capture condition. The at least one image capture condition is varied for each of a sequence of captured still images.

The mobile terminal may further comprise a display unit, operatively coupled to the image capture unit, configured to display at least one still image of the sequence of captured still images. The mobile terminal may further comprise an input unit, operatively coupled to the display unit, configured to receive a user selection to select at least one displayed still image. The mobile terminal may further comprise a storage unit, operatively coupled to the display unit, configured to store the at least one displayed still image selected by a user.

Using the present invention, a user may set multiple conditions before image capture and obtain multiple captured images according to the set conditions through one image capture command. The user may also select and store one or more of the captured images.

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A method for capturing a still image in a mobile terminal, the method comprising:
setting at least one image capture condition; and
capturing a sequence of still images according to the at least one image capture condition, wherein the at least one image capture condition is varied for each of a sequence of captured still images.

2. The method of claim 1, further comprising:
displaying at least one of the sequence of captured still images.

3. The method of claim 2, further comprising:
receiving a user selection to select at least one displayed captured still image.

4. The method of claim 3, further comprising:
storing the at least one displayed captured still image selected by a user.

5. The method of claim 1, wherein the at least one image capture condition is set by a user.

6. The method of claim 1, wherein the at least one image capture condition is set by the mobile terminal.

7. The method of claim 1, wherein the at least one image capture condition comprises at least one of whether to use a flash, an image magnification, an image resolution, a display screen brightness, and a color effect.

8. The method of claim 1, wherein the step of capturing a sequence of still images further comprises:
capturing a number of still images associated with a number of set image capture conditions.

9. The method of claim 3, further comprising:
deleting displayed captured still images not selected by the user.

10. A mobile terminal configured for image capture, the mobile terminal comprising:
an image capture unit configured to capture a sequence of still images according to at least one predefined image capture condition, wherein the at least one image capture condition is varied for each of a sequence of captured still images.

11. The mobile terminal of claim 10, further comprising:
a display unit, operatively coupled to the image capture unit, configured to display at least one still image of the sequence of captured still images.

12. The mobile terminal of claim 11, further comprising:
an input unit, operatively coupled to the display unit, configured to receive a user selection to select at least one displayed still image.

13. The mobile terminal of claim 12, further comprising:
a storage unit, operatively coupled to the display unit, configured to store the at least one displayed still image selected by a user.

14. The mobile terminal of claim 10, wherein the at least one predefined image capture condition is set by a user.

15. The mobile terminal of claim 10, wherein the at least one predefined image capture condition is set by the mobile terminal.

16. The mobile terminal of claim 10, wherein the at least one predefined image capture condition comprises at least one of whether to use a flash, an image magnification, an image resolution, a display screen brightness, and a color effect.

17. The mobile terminal of claim 10, wherein a number of still images in the sequence of captured images is associated with a number of predefined image capture conditions.
